# EUROPÄISCHE PATENTSCHRIFT

(11) **EP 3 122 499 B1**
(45) Veröffentlichungstag und Bekanntmachung des Hinweises auf die Patenterteilung: **03.07.2019**
(21) Anmeldenummer: 15713850.4
(22) Anmeldetag: 20.03.2015
(51) Int. Cl.: B23B 31/117, B23Q 11/10, B23B 31/02

(54) **VORRICHTUNG ZUR AUFNAHME EINES WERKZEUGS**
DEVICE FOR HOLDING A TOOL
DISPOSITIF SERVANT DE LOGEMENT À UN OUTIL

(30) Priorität: 26.03.2014 DE 102014104192
(43) Veröffentlichungstag der Anmeldung: 01.02.2017
(73) Patentinhaber: Hochschule Furtwangen, 78120 Furtwangen (DE)
(72) Erfinder: SCHMALZRIED, Siegfried, 78224 Singen (DE); HERBERTH, Thomas, 78532 Tuttlingen (DE)
(74) Vertreter: Schmid, Wolfgang
(86) Internationale Anmeldenummer: PCT/EP2015/055960
(87) Internationale Veröffentlichungsnummer: WO 2015/144588

(56) Entgegenhaltungen:
- WO-A1-97/05987
- DE-A1- 3 601 385
- DE-A1-102008 044 996
- DE-A1-102009 043 850
- JP-A- 2000 015 539
- US-A1- 2010 242 696

## Beschreibung

Die Erfindung betrifft eine Vorrichtung zur Aufnahme eines Werkzeugs nach der im Oberbegriff von Anspruch 1 näher definierten Art.

Eine gattungsgemäße Vorrichtung ist aus der DE 197 54 518 C2 bekannt. Hierbei sind in einer Innenwandung der als Buchse ausgebildeten Vorrichtung mehrere achsparallele Nuten geformt, die sich durch die gesamte Länge der Buchse erstrecken und durch die ein Schmiermedium zu einem in der Buchse aufgenommenen Werkzeug zugeführt wird.

Ein für eine Minimalmengenschmierung ausgelegtes Gewindeschneidfutter ist in der EP 0 956 919 A1 beschrieben.

In der DE 10 2008 044 996 A1 ist eine weitere Vorrichtung zur Aufnahme eines Werkzeugs beschrieben. Diese weist eine Kühlmittelleiteinrichtung mit mehreren Flachnuten an einer Innenseite einer Aufnahmeöffnung für den Schaft des Werkzeugs auf. Die Flachnuten weisen eine sich zum Austritt des Kühlmittels hin verringernde Tiefe und eine sich zum Austritt des Kühlmittels hin vergrößernde Breite auf. Dadurch soll einerseits eine Beschleunigung des Kühlmittels in Richtung des Austritts und andererseits eine günstige Strahlformung, nämlich ein in Radialrichtung möglichst dünner und in Tangentialrichtung möglichst breiter Strahl, erreicht werden.

Problematisch bei den bekannten Lösungen ist insbesondere die beim Einsatz auftretende Entmischung des als Schmiermedium verwendeten Aerosols innerhalb der durch die Vorrichtung verlaufenden Kanäle, insbesondere bei höheren Drehzahlen, wodurch eine gute Schmiermittelversorgung des in der Vorrichtung angeordneten Werkzeugs nicht gegeben ist.

Es ist daher Aufgabe der vorliegenden Erfindung, eine Vorrichtung zur Aufnahme eines mit einem Schmiermittel zu versorgenden Werkzeugs zu schaffen, bei der mit einfachen Mitteln eine Minimalmengenschmierung des Werkzeugs möglich ist.

Ein weiterer Vorteil der erfindungsgemäßen Lösung besteht darin, dass bei dünnen Werkzeugen auf einen inneren Kühlkanal verzichtet werden kann, so dass eine höhere Werkzeugstabilität, ein geringerer Verschleiß und eine höhere Qualität erreicht wird. Des Weiteren ergeben sich durch die erfindungsgemäße Lösung auch geringere Kosten für das Werkzeug, da auf einen durch dasselbe verlaufenden Schmiermittelkanal verzichtet werden kann.

Wenn in einer sehr vorteilhaften Weiterbildung der Erfindung der Querschnitt der Auslassöffnungen der Kanäle um 8 bis 15 % größer als der Querschnitt der Einlassöffnungen der Kanäle ist, so hat dies besonders positive Auswirkungen auf die Verhinderung der Entmischung des die Kanäle durchströmenden Schmiermittels.

Eine besonders einfache Ausführungsform der Querschnittsvergrößerung der Kanäle ergibt sich, wenn die Kanäle von der Einlassöffnung zu der Auslassöffnung konisch verlaufen.

Des Weiteren kann vorgesehen sein, dass die Vorrichtung durch Sintern hergestellt ist. Insbesondere was die Erzeugung der gewendelten Kanäle anbelangt hat sich Sintern als eine sehr einfache Möglichkeit zur Erzeugung der erfindungsgemäßen Vorrichtung erwiesen.

Eine gleichmäßige Schmiermittelversorgung des in der erfindungsgemäßen Vorrichtung enthaltenen Werkzeugs ergibt sich, wenn zwei Kanäle vorgesehen sind, die um 180° zueinander versetzt sind.

Dies ist auch der Fall, wenn alternativ drei Kanäle vorgesehen sind, die um jeweils 120° zueinander versetzt sind. Durch den Einsatz dreier Kanäle wird eine noch bessere Versorgung des Werkzeugs mit dem Schmiermittel erreicht.

Wenn das Gemisch in einer besonders feinen Verteilung aus den Kanälen austreten soll, kann des Weiteren vorgesehen sein, dass die Auslassöffnungen der Kanäle als Lavaldüsen ausgeführt sind, die in Richtung der Mittelachse der Vorrichtung gerichtet sind. Durch die Verwendung einer solchen Lavaldüse wird ein Aufbrechen der in dem Aerosol enthaltenen Tropfen erreicht, was zu einer besseren und gleichmäßigeren Benetzung des Werkzeugs mit dem Schmiermittel führt. Dabei ergibt sich durch die in Richtung der Mittelachse der Vorrichtung gerichteten Auslassöffnungen eine Zentrierung des Schmiermittels auf das Werkzeug hin.

Um die Entmischung des Aerosols aufgrund der Rotation der Vorrichtung bei ihrem Einsatz so gut wie möglich zu verhindern, kann des Weiteren vorgesehen sein, dass die Wendelung der Kanäle derart ausgelegt ist, dass ein in dem Schmiermittel enthaltener Aerosoltropfen mit einer vorgegebenen Geschwindigkeit als überlagerte Bewegung aus Rotation und Eigengeschwindigkeit sich wenigstens annähernd geradlinig von der Einlassöffnung zu der Auslassöffnung bewegt.

Eine besonders vorteilhafte Nutzung der erfindungsgemäßen Vorrichtung ergibt sich, wenn dieselbe als Werkzeugaufnahmebuchse zur Anordnung innerhalb eines Spannfutters ausgebildet ist.

In diesem Zusammenhang kann eine weitere vorteilhafte Ausgestaltung der Erfindung darin bestehen, dass die Summe der Querschnittsflächen der Kanäle im Bereich der Einlassöffnungen wenigstens annähernd dem Querschnitt einer Auslassöffnung eines zur Durchströmung mit dem Schmiermittel vorgesehenen Kanals in dem Spannfutter entspricht. Auf diese Weise werden der Druck und die Strömungsgeschwindigkeit innerhalb des gesamten, von dem Schmiermittel durchströmten Kanals sowohl innerhalb des Spannfutters als auch innerhalb der in dem Spannfutter aufgenommenen Werkzeugaufnahmebuchse konstant gehalten.

Nachfolgend ist ein Ausführungsbeispiel der Erfindung anhand der Zeichnung prinzipmäßig dargestellt.

Es zeigt:
- Fig. 1: einen Schnitt durch eine erfindungsgemäße Vorrichtung, die in diesem Ausführungsbeispiel als in einem Spannfutter aufgenommene Werkzeugaufnahmebuchse ausgebildet ist;
- Fig. 2: eine perspektivische Darstellung der erfindungsgemäßen Vorrichtung aus Fig. 1 mit den darin enthaltenen, zur Durchströmung mit einem Schmiermittel vorgesehenen Kanälen;
- Fig. 3: eine vergrößerte Darstellung gemäß der Linie III aus Fig. 2; und
- Fig. 4: die Querschnittsflächen der Einlassöffnungen der Kanäle innerhalb der als Werkzeugaufnahmebuchse ausgeführten Vorrichtung und einer Auslassöffnung des Kanals innerhalb des Spannfutters.

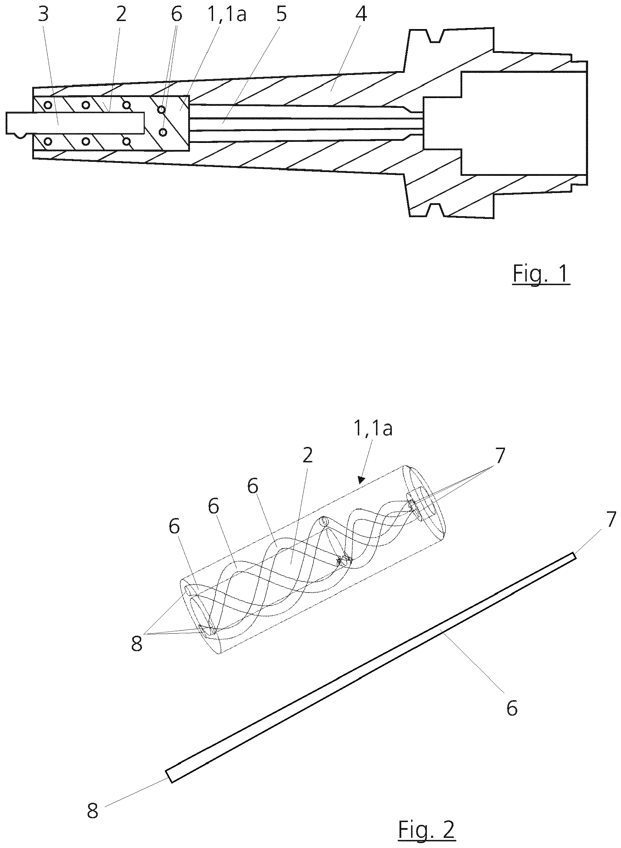

Fig. 1 zeigt eine im dargestellten Ausführungsbeispiel als Werkzeugaufnahmebuchse 1a ausgebildete Vorrichtung 1, die eine zentrale Bohrung 2 zur Aufnahme eines Werkzeugs 3, beispielsweise eines Fräs- oder Bohrwerkzeugs, aufweist. Die Werkzeugaufnahmebuchse 1a selbst ist in einem Spannfutter 4 aufgenommen, das in an sich bekannter Weise in eine nicht dargestellte Werkzeugmaschine eingespannt werden kann. Die Verbindung der Werkzeugaufnahmebuchse 1a mit dem Spannfutter 4 sowie die Verbindung des Werkzeugs 3 mit der Werkzeugaufnahmebuchse 1a kann ebenfalls auf an sich bekannte Weise durchgeführt werden, beispielsweise mittels Schrumpfverbindungen. Neben Aufschrumpfen sind selbstverständlich auch andere Verbindungsmöglichkeiten denkbar.

In dem Spannfutter 4 verläuft ein zentraler Kanal 5, der zur Durchströmung mit einem nicht dargestellten Schmiermittel vorgesehen ist. Dabei dient der Kanal 5 zur Zuleitung des Schmiermittels zu wenigstens zwei Kanälen 6, die sich innerhalb der Werkzeugaufnahmebuchse 1a befinden und die ebenfalls von dem Schmiermittel durchströmt werden, um das Schmiermittel dem Werkzeug 3 zuzuführen. Als Schmiermittel wird vorzugsweise ein Aerosol eingesetzt, bei dem vorzugsweise Öltröpfchen in einem Gas, wie zum Beispiel Luft bzw. Druckluft, gelöst sind.

In einer nicht dargestellten Ausführungsform wäre es auch möglich, dass die Kanäle 6 in dem Spannfutter 4 vorgesehen sind, d.h. dass auf die Werkzeugaufnahmebuchse 1a verzichtet wird und die Vorrichtung 1 durch das Spannfutter 4 gebildet ist, in dem dann das Werkzeug 3 direkt aufgenommen ist.

In Fig. 2 ist die Werkzeugaufnahmebuchse 1a in einer perspektivischen Darstellung gezeigt und es ist der Verlauf der in diesem Fall drei Kanäle 6 durch dieselbe zu erkennen. Daraus geht hervor, dass die in diesem Fall drei Kanäle 6 wendelförmig um die Bohrung 2 der Werkzeugaufnahmebuchse 1a verlaufen. Im vorliegenden Fall sind die drei Kanäle 6 um jeweils 120° zueinander versetzt angeordnet, um eine Symmetrie derselben zu erreichen. In einem nicht dargestellten Ausführungsbeispiel, in dem lediglich zwei Kanäle 6 vorgesehen sind, könnten diese dementsprechend um 180° zueinander versetzt angeordnet sein. Gleiches gilt auch für eine größere Anzahl an Kanälen 6 innerhalb der Werkzeugaufnahmebuchse 1a. Die Anzahl der Kanäle 6 kann beispielsweise von der Größe des in der Bohrung 2 aufgenommenen Werkzeugs 3 abhängig sein. So ist auch eine Variante mit vier oder mehr Kanälen 6 denkbar, um auch Vorrichtungen 1 mit einem minimalen Durchmesser zu ermöglichen, insbesondere wenn diese als Werkzeugaufnahmebuchse 1a ausgebildet sind.

Fig. 2 zeigt des Weiteren eine Abwicklung eines der Kanäle 6, aus der hervorgeht, dass die Kanäle 6 einen sich von einer Einlassöffnung 7 an der Oberseite der Werkzeugaufnahmebuchse 1a zu einer Auslassöffnung 8 an der Unterseite der Werkzeugaufnahmebuchse 1a vergrößernden Querschnitt aufweisen. Dieser sich vergrößernde Querschnitt der Kanäle 6 dient zur Verhinderung der Entmischung des die Kanäle 6 durchströmenden Schmiermittels. Bei der in Fig. 2 dargestellten Ausführungsform verlaufen die Kanäle 6 von der Einlassöffnung 7 zu der Auslassöffnung 8 konisch. Des Weiteren ist bei der vorliegenden Ausführungsform der Querschnitt der Auslassöffnungen 8 der Kanäle 6 um 8% bis 15% größer als der Querschnitt der Einlassöffnungen 7 der Kanäle 6. Das Verhältnis des Querschnitts der Auslassöffnungen 8 zu dem Querschnitt der Einlassöffnungen 7 ist in Fig. 2 jedoch nicht maßstäblich dargestellt.

Die Kanalführung der Kanäle 6 ist für eine Minimalmengenschmierung des Werkzeugs 3 ausgelegt und weist vorzugsweise keine scharfkantigen Ecken auf, um eine Tropfenbildung und damit eine Entmischung zu verhindern. Stattdessen sind alle scharfe Kanten, wie zum Beispiel 90°-Ecken, an Übergabestellen, wie beispielsweise an den Eingangsöffnungen 7, oder innerhalb der Kanäle 6 strömungsgünstig abgerundet.

Die Wendelung der Kanäle 6 ist dabei so ausgelegt, dass ein in dem Schmiermittel enthaltener Aerosoltropfen sich mit einer vorgegebenen Geschwindigkeit als überlagerte Bewegung aus Rotation und Eigengeschwindigkeit wenigstens annähernd geradlinig von der Einlassöffnung 7 zu der Auslassöffnung 8 bewegt. Wenn beispielsweise eine Frässpindel für eine Drehzahl von 20.000 n/min ausgelegt ist, die Länge der Werkzeugaufnahmebuchse 1a 0,08m und die Strömungsgeschwindigkeit des Aerosols 10m/s beträgt, wird die Werkzeugaufnahmebuchse 1a von einem Öltropfen in einer Zeit von 0,008s durchströmt. In dieser Zeit von 0,008s hat die Spindel und damit auch die Werkzeugaufnahmebuchse 1a 2,66 Umdrehungen zurückgelegt, so dass die Wendelung der Kanäle auf 2,66 Umwandungen über die Länge der Werkzeugaufnahmebuchse 1a von 0,08m ausgelegt wird. Mit anderen Worten, in diesem Fall wendelt sich also ein Kanal 6 2,66mal bzw. in einem Winkel von ca. 960° um die Bohrung 2 der Werkzeugaufnahmebuchse 1a. Durch eine solche Auslegung der Kanäle 6 wirkt im Prinzip keine Querbeschleunigung auf die in dem Aerosol enthaltenen Öltröpfchen.

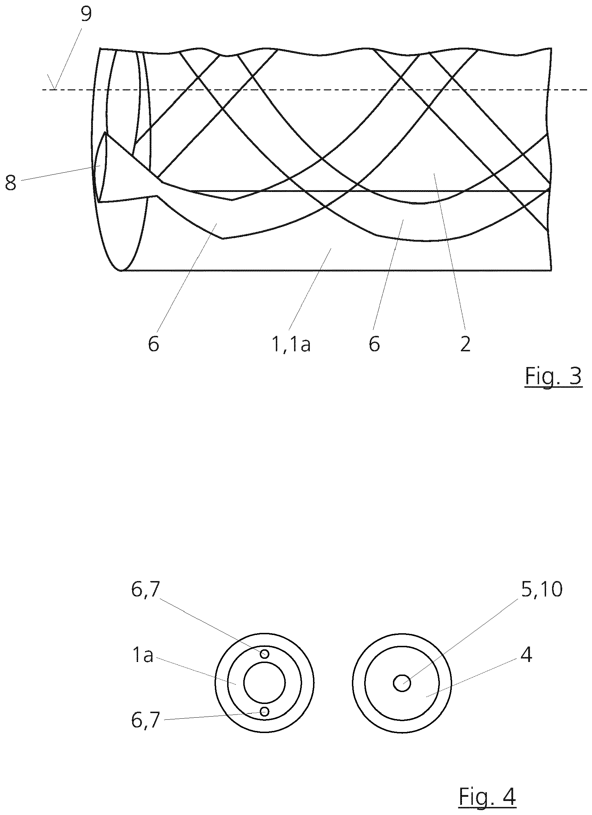

In der vergrößerten Darstellung von Fig. 3 ist eine der Auslassöffnungen 8 eines der Kanäle 6 dargestellt. Daraus geht hervor, dass die Auslassöffnung 8 in der Form einer Lavaldüse ausgeführt ist, um einen Aufbruch der in dem Aerosol sich befindenden Öltropfen zu erreichen. Des Weiteren ist erkennbar, dass die Auslassöffnung 8 in Richtung einer Mittelachse 9 der Werkzeugaufnahmebuchse 1a gerichtet ist.

Fig. 4 zeigt die Querschnittsflächen der Einlassöffnungen 7 der durch die Werkzeugaufnahmebuchse 1a verlaufenden Kanäle 6 sowie die Querschnittsfläche einer Auslassöffnung 10 des durch das Spannfutter 4 verlaufenden Kanals 5. Vorzugsweise ist die Summe der Querschnittsflächen der Kanäle 6 im Bereich der Einlassöffnungen 7 wenigstens annähernd gleich der Querschnittsfläche der Auslassöffnung 10 des Kanals 5 in dem Spannfutter 4, so dass ein konstanter Druck und eine konstante Strömungsgeschwindigkeit innerhalb des gesamten, von dem Schmiermittel durchströmten Kanals innerhalb des Spannfutters 4 und der Werkzeugaufnahmebuchse 1a erreicht wird.

Grundsätzlich kann die Werkzeugaufnahmebuchse 1a in den unterschiedlichsten Längen und Durchmessern, sowohl hinsichtlich des Außendurchmessers derselben als auch hinsichtlich des Durchmessers der Bohrung 2, ausgeführt sein. Vorzugsweise wird die Werkzeugaufnahmebuchse 1a bzw. allgemein die Vorrichtung 1 durch Sintern aus einem geeigneten Material hergestellt.

## Patentansprüche

1. Vorrichtung (1) zur Aufnahme eines Werkzeugs (3), mit einer Ausnehmung (2) für das Werkzeug (3) und mit wenigstens zwei zur Durchströmung mit einem Schmiermittel vorgesehenen Kanälen (6), die wendelförmig um die Bohrung (2) verlaufen und die jeweils eine Einlassöffnung (7) und eine Auslassöffnung (8) für das Schmiermittel aufweisen,
**dadurch gekennzeichnet, dass** die wenigstens zwei Kanäle (6) einen sich von der Einlassöffnung (7) zu der Auslassöffnung (8) kontinuierlich vergrößernden Querschnitt aufweisen.

2. Vorrichtung (1) nach Anspruch 1,
**dadurch gekennzeichnet, dass** der Querschnitt der Auslassöffnungen (8) der Kanäle (6) um 8 bis 15 % größer als der Querschnitt der Einlassöffnungen (7) der Kanäle (6) ist.

3. Vorrichtung (1) nach Anspruch 1 oder 2,
**dadurch gekennzeichnet, dass** die Kanäle (6) von der Einlassöffnung (7) zu der Auslassöffnung (8) konisch verlaufen.

4. Vorrichtung (1) nach Anspruch 1, 2 oder 3,
**dadurch gekennzeichnet, dass** dieselbe durch Sintern hergestellt ist.

5. Vorrichtung (1) nach einem der Ansprüche 1 bis 4,
**dadurch gekennzeichnet, dass** zwei Kanäle (6) vorgesehen sind, die um 180° zueinander versetzt sind.

6. Vorrichtung (1) nach einem der Ansprüche 1 bis 4,
**dadurch gekennzeichnet, dass** drei Kanäle (6) vorgesehen sind, die um jeweils 120° zueinander versetzt sind.

7. Vorrichtung (1) nach einem der Ansprüche 1 bis 6,
**dadurch gekennzeichnet, dass** die Auslassöffnungen (8) der Kanäle (6) als Lavaldüsen ausgeführt sind, die in Richtung der Mittelachse (9) der Vorrichtung (1) gerichtet sind.

8. Vorrichtung (1) nach einem der Ansprüche 1 bis 7,
**dadurch gekennzeichnet, dass** die Wendelung der Kanäle (6) derart ausgelegt ist, dass ein in dem Schmiermittel enthaltener Aerosoltropfen sich mit einer vorgegebenen Geschwindigkeit als überlagerte Bewegung aus Rotation und Eigengeschwindigkeit wenigstens annähernd geradlinig von der Einlassöffnung (7) zu der Auslassöffnung (8) bewegt.

9. Vorrichtung (1) nach einem der Ansprüche 1 bis 8,
**dadurch gekennzeichnet, dass** dieselbe als Werkzeugaufnahmebuchse (1a) zur Anordnung innerhalb eines Spannfutters (4) ausgebildet ist.

10. Vorrichtung (1) nach Anspruch 9,
**dadurch gekennzeichnet, dass** die Summe der Querschnittsflächen der Kanäle (6) im Bereich der Einlassöffnungen (7) wenigstens annähernd dem Querschnitt einer Auslassöffnung (10) eines zur Durchströmung mit dem Schmiermittel vorgesehenen Kanals (5) in dem Spannfutter (4) entspricht.

## Claims

1. A device (1) for receiving a tool (3), having a recess (2) for the tool (3) and having at least two channels (6), which are provided for a lubricant to flow through, which extend in a helical manner around the hole (2), and which each have an inlet opening (7) and an outlet opening (8) for the lubricant,
**characterized in that**
the at least two channels (6) have a cross-section which continuously increases from the inlet opening (7) to the outlet opening (8).

2. The device (1) as claimed in claim 1,
**characterized in that**
the cross-section of the outlet openings (8) of the channels (6) is from 8 to 15% greater than the cross-section of the inlet openings (7) of the channels (6).

3. The device (1) as claimed in claim 1 or 2,
**characterized in that**
the channels (6) extend conically from the inlet opening (7) to the outlet opening (8).

4. The device (1) as claimed in claim 1, 2 or 3,
**characterized in that**
it is produced by means of sintering.

5. The device (1) as claimed in one of claims 1 to 4,
**characterized in that**
there are provided two channels (6) which are offset through 180° with respect to each other.

6. The device (1) as claimed in one of claims 1 to 4,
**characterized in that**
there are provided three channels (6) which are offset through 120° with respect to each other.

7. The device (1) as claimed in one of claims 1 to 6,
**characterized in that**
the outlet openings (8) of the channels (6) are constructed as Laval nozzles which are orientated in the direction of the center axis (9) of the device (1).

8. The device (1) as claimed in one of claims 1 to 7,
**characterized in that**
the coiling of the channels (6) is configured in such a manner that an aerosol droplet which is contained in the lubricant moves at a predetermined speed as a superimposed movement comprising rotation and inherent speed in an at least substantially linear manner from the inlet opening (7) to the outlet opening (8).

9. The device (1) as claimed in one of claims 1 to 8,
**characterized in that**
it is constructed as a tool receiving bushing (1a) for arrangement inside a clamping chuck (4).

10. The device (1) as claimed in claim 9,
**characterized in that**
the sum of the cross-sectional surface-areas of the channels (6) in the region of the inlet openings (7) at least substantially corresponds to the cross-section of an outlet opening (10) of a channel (5) which is provided for the lubricant to flow through in the clamping chuck (4).

## Revendications

1. Dispositif (1) de prise en charge d'un outil (3), comportant un évidement (2) pour l'outil (3) et avec au moins deux canaux (6) prévus pour la circulation de passage d'un moyen de lubrification, de forme spiralée autour de l'évidement (2) et qui comportent respectivement une ouverture d'entrée (7) et une ouverture de sortie (8) pour le moyen de lubrification,
**caractérisé en ce que** lesdits au moins deux canaux (6) comportent une section transversale continuellement grandissante entre l'ouverture d'entrée (7) et l'ouverture de sortie (8).

2. Dispositif (1) selon la revendication 1,
**caractérisé en ce que**
la section transversale de l'ouverture de sortie (8) des canaux (6) est de 8 à 15% plus grande que la section transversale de l'ouverture d'entrée (7) des canaux (6).

3. Dispositif (1) selon la revendication 1 ou 2,
**caractérisé en ce que**
les canaux (6) sont coniques de l'ouverture d'entrée (7) à l'ouverture de sortie (8).

4. Dispositif (1) selon la revendication 1, 2 ou 3,
**caractérisé en ce qu'**il
soit réalisé par frittage.

5. Dispositif (1) selon l'une des revendications 1 à 4,
**caractérisé en ce que**
deux canaux (6) sont prévus, qui sont décalés de 180° l'un par rapport à l'autre.

6. Dispositif (1) selon l'une des revendications 1 à 4,
**caractérisé en ce que**
trois canaux (6) sont prévus, qui sont chacun décalés de 120° l'un par rapport à l'autre.

7. Dispositif (1) selon l'une des revendications 1 à 6,
**caractérisé en ce que**
les ouvertures de sorties (8) des canaux (6) sont constitués par des buses de Laval, qui sont dirigées dans la direction de l'axe central (9) du dispositif (1).

8. Dispositif (1) selon l'une des revendications 1 à 7,
**caractérisé en ce que** la spirale des canaux (6) est réalisée de telle façon qu'une goutte d'aérosol contenue dans le lubrifiant se déplace à une vitesse prédéterminée, sous la forme d'un mouvement de rotation et d'une vitesse de l'air superposés, au moins approximativement de manière rectiligne de l'ouverture d'entrée (7) jusqu'à l'ouverture de sortie (8).

9. Dispositif (1) selon l'une des revendications 1 à 8,
**caractérisé en ce qu'**il
est conçu comme un socle de réception (1a) pour outil à placer dans un mandrin (4).

10. Dispositif (1) selon la revendication 9,
**caractérisé en ce que**
la somme des surfaces des sections transversales des canaux (6) dans la zone des ouvertures d'entrée (7), correspond au moins approximativement à la section transversale d'une ouverture de sortie (10) d'un canal (5) destiné au passage de lubrifiant correspondant dans le mandrin (4).
